# EUROPEAN PATENT APPLICATION

(11) **EP 4 730 528 A1**
(43) Date of publication of application: **22.04.2026**
(21) Application number: 24842312.1
(22) Date of filing: 12.07.2024
(51) Int. Cl.: H01M 50/258, H01M 50/213, H01M 10/658, H01M 50/24, H01M 50/289, A62C 3/16, A62C 31/00

(54) **FIREPROOF BATTERY MODULE AND BATTERY ASSEMBLY**

(30) Priority: 14.07.2023 CN 202321869587 U
(71) Applicant: Vertiv Tech Co., Ltd., Guangdong 518055 (CN)
(72) Inventor: WANG, Jiaxing, Shenzhen, Guangdong 518055 (CN); WANG, Ke, Shenzhen, Guangdong 518055 (CN); CHEN, Zonghui, Shenzhen, Guangdong 518055 (CN); HU, Dawei, Shenzhen, Guangdong 518055 (CN)
(74) Representative: Beal, James Michael
(86) International application number: PCT/CN2024/105231
(87) International publication number: WO 2025/016319

(57) **Abstract**

A fire-resistant battery module and a battery assembly. The fire-resistant battery module comprises a plurality of cells (10) arranged at intervals, a fire-resistant partition structure (20), fire extinguishing microcapsules (30), and two fire-resistant plates (40) arranged side by side. The fire-resistant partition structure (20) is distributed in gaps of the plurality of cells (10), so as to block heat transfer between adjacent cells (10). The fire extinguishing microcapsules (30) are arranged at positive electrodes of the cells (10), so as to extinguish the fire on the positive electrodes of the cells (10). The plurality of cells (10), the fire-resistant partition structure (20) and the fire extinguishing microcapsules (30) are all located between the two fire-resistant plates (40). By the design of the three parts, a fire extinguishing and fire-resistant structure of the module is formed, improving the fire-resistant performance of the battery module, and meeting higher safety requirements.

## Description

This application claims priority to Chinese Patent Application No. 202321869587.0 titled "FIRE-RESISTANT BATTERY MODULE AND BATTERY ASSEMBLY", filed on July 14, 2023 with the China National Intellectual Property Administration, which is incorporated herein by reference in its entirety.

### FIELD

The present disclosure relates to the technical field of new energy batteries, and in particular to a fire-resistant battery module and a battery assembly.

### BACKGROUND

In the era of rapid development and change of the Internet and big data, UPS, as its foundation, is constantly evolving and being updated. Especially with the rapid development and application of lithium batteries and the rapid expansion of the new energy industry, lead-acid batteries previously used are now being replaced by lithium battery in more and more scenarios. Safety application of lithium batteries is becoming increasingly important and has become a top priority for end customers and the market.

Lithium batteries, especially ternary lithium batteries, have advantages such as high energy density, high activity, long backup time, and high discharge rate, which are important factors for people to choose the lithium batteries. Correspondingly, the safety requirement for the lithium batteries is getting higher and higher. In order to meet safety design requirements and requirements of market application conditions, higher requirements are put forward for practitioners in the lithium battery research and development industry, especially the need to meet the international market demand for the fire protection test and certification.

Mainstream technologies of lithium battery include lithium iron phosphate and ternary lithium. Compared with lithium iron phosphate, a ternary lithium battery has a higher energy density, higher discharge rate, higher activity of positive electrode, and higher integrability of structure and system per unit volume and unit mass. Therefore, in the field of UPS lithium battery backup power, ternary lithium can better meet the requirement for short-term high-rate backup power. However, the ternary lithium battery is more dangerous than a lithium iron phosphate battery.

Fire-resistant design for the ternary lithium battery has always been a challenge. There are successful cases at the cabinet-level vertical architecture level both domestically and internationally, but lack of successful cases for modular parallel architecture design schemes at the module level. Therefore, conventional ternary lithium battery modules have poor fire-resistant performance and cannot meet increasingly higher safety requirements.

### SUMMARY

The present disclosure provides a fire-resistant battery module and a battery assembly, with which the problem of poor fire-resistant performance in the battery modules in prior art is solved and a higher safety requirement is satisfied.

To solve the aforementioned problem, a fire-resistant battery module is provided according to an aspect of the present disclosure. The fire-resistant battery module includes: multiple cells spaced apart from each other; a fire-resistant partition structure distributed in gaps between the multiple cells to block heat transfer between adjacent ones of the cells; a fire extinguishing microcapsule disposed at positive electrodes of the cells to extinguish fire at the positive electrodes of the cells; two fire-resistant boards arranged side by side, where the multiple cells, the fire-resistant partition structure and the fire extinguishing microcapsule are all located between the two fire-resistant boards.

Further, the multiple cells are arranged in multiple rows and multiple columns, the fire-resistant partition structure includes multiple lateral fire-resistant sheets and multiple longitudinal fire-resistant sheets which are arranged in a cross manner to separate and form multiple partition cavities, within each of which has one of the cells.

Further, the lateral fire-resistant sheet has a first slot, the longitudinal fire-resistant sheet has a second slot, and the longitudinal fire-resistant sheet is inserted into the first slot and the lateral fire-resistant sheet is inserted into the second slot to achieve connection with each other.

Further, a length of the lateral fire-resistant sheet is greater than a length of the longitudinal fire-resistant sheet, an end of the lateral fire-resistant sheet is formed as a flange, and one of the cells is provided in an area between the flange and a longitudinal fire-resistant sheet adjacent to the flange.

Further, the lateral fire-resistant sheet has a multi-layer structure, which includes at least one layer of coated mica layer and at least one layer of reinforced glass cloth layer, a thickness of the lateral fire-resistant sheet is in a range from 0.5mm to 1.5mm, and a material of the longitudinal fire-resistant sheet is the same as that of the lateral fire-resistant sheet.

Further, positive electrodes of a portion of the cells face one of the fire-resistant boards, and positive electrodes of the other portion of the cells face the other one of the fire-resistant boards; the fire-resistant battery module includes multiple fire extinguishing microcapsules which are distributed on both sides of the multiple cells, and positions and shapes of the multiple fire extinguishing microcapsules match positions where positive electrodes of the multiple cells are distributed.

Further, each of the fire extinguishing microcapsules covers positive electrodes of at least two of the cells, where the each of the fire extinguishing microcapsules is bonded with the positive electrodes of the at least two of the cells.

Further, the fire extinguishing microcapsule is a sheet formed of perfluorohexanone, and a thickness of the fire extinguishing microcapsule is in a range from 1.5mm to 3.5mm.

Further, multiple exhaust vents are distributed on the fire-resistant board, and the fire-resistant board is fixed by bonding.

Further, a material of the fire-resistant board is glass fiber, and a thickness of the fire-resistant board is in a range from 0.5mm to 1.5mm.

Further, the fire-resistant battery module further includes a first bracket and a second bracket connected to each other, the first bracket and the second bracket are both located between the two fire-resistant boards, the fire-resistant partition structure and the multiple cells are both located within the first bracket and the second bracket, and the fire-resistant partition structure is bonded to at least one of the first bracket or the second bracket.

A battery assembly is provided according to another aspect of the present disclosure. The battery assembly includes an outer shell and the fire-resistant battery module as described above, where the battery assembly includes multiple fire-resistant battery modules which are arranged side by side within a cavity of the outer shell.

With the technical solution of the present disclosure, the fire-resistant battery module is provided. The fire-resistant battery module includes the multiple cells spaced apart from each other, the fire-resistant partition structure, the fire extinguishing microcapsule, and the two fire-resistant boards arranged side by side. The fire-resistant partition structure is distributed in gaps between the multiple cells to block heat transfer between adjacent ones of the cells. The fire extinguishing microcapsule is disposed at positive electrodes of the cells to extinguish fire at the positive electrodes of the cells. The multiple cells, the fire-resistant partition structure and the fire extinguishing microcapsule are all located between the two fire-resistant boards. Once a cell experiences thermal runaway, the positive terminal of the cell first releases gas, which is flammable and may generate a flame. In the solution, since the fire extinguishing microcapsule is arranged at the positive electrode of the cell, when the flame is generated at the positive electrode of the cell, the fire extinguishing microcapsule is triggered to extinguish the fire. The fire-resistant partition structure is distributed between the cells to separate the multiple cells from each other. In a case where a certain cell experiences thermal runaway, the fire-resistant partition structure isolates the cell which experiences thermal runaway in a separate space, preventing the thermal runaway from spreading to other adjacent cells. In addition, the fire-resistant boards are arranged on both sides of the multiple cells, thereby preventing the flames inside the module from spreading outward. In this solution, by means of the design of the three parts described above, a fire extinguishing and fire-resistant structure of the module is formed, thereby improving the fire-resistant performance of the battery module, and meeting higher safety requirements.

### BRIEF DESCRIPTION OF THE DRAWINGS

The accompanying drawings, which constitute a part of the present disclosure, are intended to provide a further understanding of the present disclosure. The exemplary embodiments of the present disclosure and descriptions thereof are intended to explain the present disclosure and do not constitute an improper limitation on the present disclosure. In the drawings:
FIG. 1 illustrates a schematic structural diagram of a fire-resistant battery module according to an embodiment of the present disclosure;
FIG. 2 illustrates an exploded view of the fire-resistant battery module in FIG. 1;
FIG. 3 illustrates a schematic diagram of a fire-resistant partition structure in FIG. 2;
FIG. 4 illustrates a schematic structural diagram of a battery assembly according to an embodiment of the present disclosure; and
FIG. 5 illustrates a schematic diagram of an internal structure of FIG.4.

Reference signs in the accompanying drawings are listed below.

| | | | | | |
|---|---|---|---|---|---|
| 10 | Cell; | 20 | Fire-resistant partition structure; | 21 | Lateral fire-resistant sheet; |
| 211 | Flange; | 22 | Longitudinal fire-resistant sheet; | | |
| 30 | Fire extinguishing microcapsule; | | | 40 | Fire-resistant board; |
| 41 | Exhaust vent; | 51 | First bracket; | 52 | Second bracket; |
| 60 | Outer shell. | | | | |

### DETAILED DESCRIPTION

Hereinafter technical solutions of embodiments of the present disclosure are described clearly and completely in conjunction with the drawings of the embodiments of the present disclosure. Apparently, the embodiments described below are only some embodiments, rather than all the embodiments of the present disclosure. The following description of at least one exemplary embodiment is merely illustrative in nature and is in no way intended to limit the present disclosure and applications or uses thereof. Any other embodiments obtained by those of ordinary skills in the art based on the embodiments of the present disclosure, without any creative effort, shall fall within the protection scope of the present disclosure.

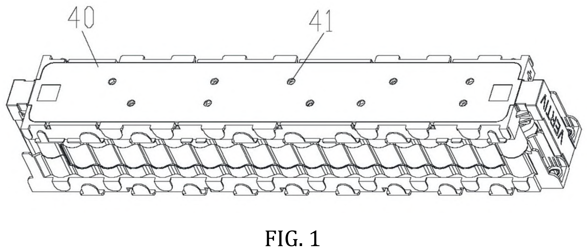

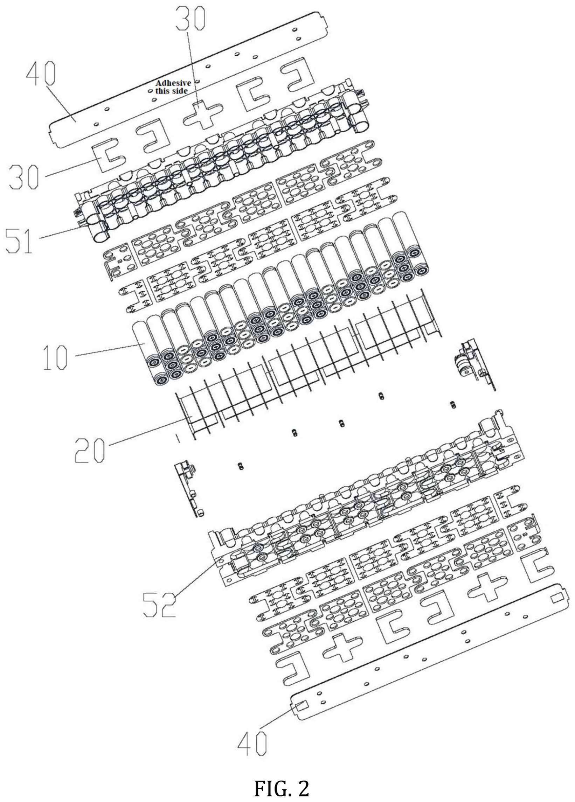

As shown in FIG. 1 to FIG. 3, a fire-resistant battery module is provided in the embodiments of the present disclosure. The fire-resistant battery module includes: multiple cells 10 spaced apart from each other; a fire-resistant partition structure 20 distributed in gaps between the multiple cells 10 to block heat transfer between adjacent ones of the cells 10; a fire extinguishing microcapsule 30 disposed at positive electrodes of the cells 10 to extinguish fire at the positive electrodes of the cells 10; two fire-resistant boards 40 arranged side by side, where the multiple cells 10, the fire-resistant partition structure 20 and the fire extinguishing microcapsule 30 are all located between the two fire-resistant boards 40.

Once a cell in the battery module experiences thermal runaway, the positive electrode of the cell first releases gas, which is flammable and may generate a flame. In the solution, since the fire extinguishing microcapsule 30 is arranged at the positive electrode of the cell 10, when the flame is generated at the positive electrode of the cell 10, the fire extinguishing microcapsule 30 is triggered to extinguish the fire. The fire-resistant partition structure 20 is distributed between the cells 10 to separate the multiple cells 10 from each other. In a case where a certain cell 10 experiences thermal runaway, the fire-resistant partition structure 20 isolates the cell 10 which experiences thermal runaway in a separate space, preventing the thermal runaway from spreading to other adjacent cells 10. In addition, the fire-resistant boards 40 are arranged on both sides of the multiple cells 10, thereby preventing the flames inside the module from spreading outward. In this solution, by means of the design of the three parts described above, a fire extinguishing and fire-resistant structure of the module is formed, thereby improving the fire-resistant performance of the battery module, and meeting higher safety requirements.

Each cell 10 is a ternary 18650 lithium-ion cell, and the cells 10 are combined in parallel and series. Apparently, other types or specifications of cells may be implemented as needed.

In the embodiment, the multiple cells 10 are arranged in multiple rows and multiple columns, the fire-resistant partition structure 20 includes multiple lateral fire-resistant sheets 21 and multiple longitudinal fire-resistant sheets 22, the multiple lateral fire-resistant sheets 21 and the multiple longitudinal fire-resistant sheets 22 are arranged in a cross manner to form multiple partition cavities within each of which has one of the cells 10. The above configuration facilitates arrangement and connection of the multiple cells 10, and results in a compact structure. The multiple lateral fire-resistant sheets 21 and multiple the longitudinal fire-resistant sheets 22 are arranged in a cross pattern to form the multiple partition cavities within each of which is provided with one of the cells 10. In this way, each cell 10 is located in a separate space, thus avoiding spread of thermal runaway.

In an implementation, the lateral fire-resistant sheet 21 has a first slot, the longitudinal fire-resistant sheet 22 has a second slot. Openings of the first slot and the second slot are set in opposite directions. The longitudinal fire-resistant sheet 22 is inserted into the first slot and the lateral fire-resistant sheet 21 is inserted into the second slot to achieve connection with each other. Such plug-in method enables the connection and cross-arrangement of the multiple lateral fire-resistant sheets 21 and the multiple longitudinal fire-resistant sheets 22, thereby facilitating assembly.

In an embodiment, a length of the lateral fire-resistant sheet 21 is greater than a length of the longitudinal fire-resistant sheet 22, an end of the lateral fire-resistant sheet 21 is formed as a flange 211, and an area between the flange 211 and a longitudinal fire-resistant sheet 22 adjacent to the flange is provided with one of the cells 10. The area between the flange 211 and the adjacent longitudinal fire-resistant sheet 22 also forms a partition cavity, thereby separating the cells 10 at the end of the fire-resistant battery module.

In an implementation, the lateral fire-resistant sheet 21 has a multi-layer structure, which includes at least one layer of coated mica layer and at least one layer of reinforced glass cloth layer, a thickness of the lateral fire-resistant sheet 21 is in a range from 0.5mm to 1.5mm, and the material of the longitudinal fire-resistant sheet 22 is the same as that of the lateral fire-resistant sheet 21. The above configuration ensures that the lateral fire-resistant sheet 21 and the longitudinal fire-resistant sheet 22 achieve a good fire-resistant effect without taking up too much space. The lateral fire-resistant sheet 21 and the longitudinal fire-resistant sheet 22 is able to withstand a temperature up to 700°C.

In an embodiment, positive electrodes of a portion of the cells 10 face one of the fire-resistant boards 40, and positive electrodes of the other portion of the cells 10 face the other one of the fire-resistant boards 40; there are multiple fire extinguishing microcapsules 30, the multiple fire extinguishing microcapsules 30 are distributed on both sides of the multiple cells 10, and positions and shapes of the multiple fire extinguishing microcapsules 30 match positions where positive electrodes of the multiple cells 10 are distributed. In this solution, the multiple fire extinguishing microcapsules 30 are distributed along with the positive electrodes of the cells 10, so as to extinguish fire on the positive electrodes of the cells 10 in time.

In an implementation, each of the fire extinguishing microcapsules 30 covers positive electrodes of at least two cells 10. In this way, the number of fire extinguishing microcapsules 30 is reduced and an assembly efficiency is improved. The fire extinguishing microcapsules 30 are bonded to the positive electrodes of the cells 10. The bonding is convenient to operate and has a high reliability. Each fire extinguishing microcapsule 30 may be cross-shaped, straight, U-shaped, or the like.

In an embodiment, the fire extinguishing microcapsule 30 is a sheet formed of perfluorohexanone, and a thickness of the fire extinguishing microcapsule 30 is in a range from 1.5mm to 3.5mm. This material achieves a good fire extinguishing effect.

Multiple exhaust vents 41 are distributed on the fire-resistant board 40, and the fire-resistant board 40 is fixed by bonding. The exhaust vent 41 is for discharging gas generated when the cell experiences thermal runaway, in order to dissipate heat and relieve pressure.

In an implementation, the material of the fire-resistant board 40 is glass fiber, and a thickness of the fire-resistant board 40 is in a range from 0.5mm to 1.5mm. The glass fiber has good fire-resistant performance and low cost.

Further, the fire-resistant battery module further includes a first bracket 51 and a second bracket 52 connected to each other, the first bracket 51 and the second bracket 52 are both located between the two fire-resistant boards 40, the fire-resistant partition structure 20 and the multiple cells 10 are both located within the first bracket 51 and the second bracket 52, and the fire-resistant partition structure 20 is bonded to at least one of the first bracket 51 or the second bracket 52. A space for accommodating the cell 10 is formed between the first bracket 51 and the second bracket 52 which can support and fix the cell 10. By bonding the fire-resistant partition structure 20 to at least one of the first bracket 51 or the second bracket 52, the fire-resistant partition structure 20 can be fixed and position deviation can be avoided.

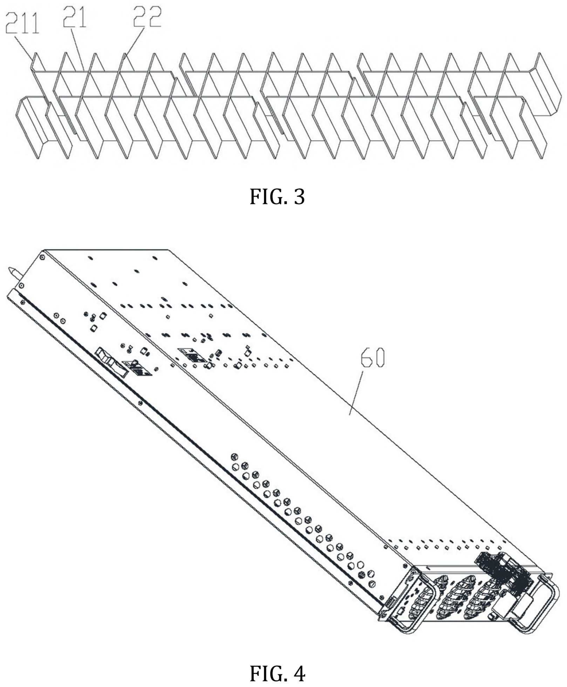

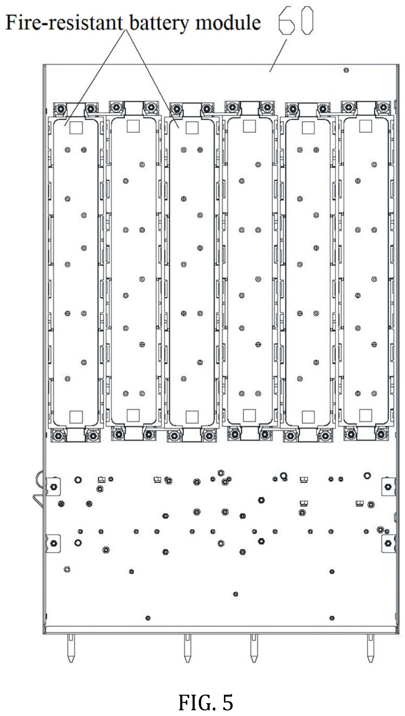

As shown in FIG. 4 and FIG. 5, a battery assembly is further provided according to the present disclosure. The battery assembly includes an outer shell 60 and the fire-resistant battery module as described above, where the battery assembly includes multiple fire-resistant battery modules which are arranged side by side within a cavity of the outer shell 60. In the solution, since the fire extinguishing microcapsule 30 is arranged at the positive electrode of the cell 10, when a flame is generated at the positive electrode of the cell 10, the fire extinguishing microcapsule 30 is triggered to extinguish the fire. The fire-resistant partition structure 20 is arranged between the cells 10 to separate the multiple cells 10 from each other. In a case where a cell 10 experiences thermal runaway, the fire-resistant partition structure 20 isolates the cell 10 which experiences thermal runaway in a separate space, preventing the thermal runaway from spreading to other adjacent cells 10. In addition, the fire-resistant boards 40 are arranged on both sides of the multiple cells 10, thereby preventing the flames inside the module from spreading outward. Therefore, in this solution, by means of the design of the three parts described above, a fire extinguishing and fire-resistant structure of the module is formed, thereby improving the fire-resistant performance of the battery module and the battery assembly, and meeting higher safety requirements.

The fire-resistant battery modules of the battery assembly are connected with each other by copper busbars, and each module is fixed inside the outer shell 60 by screws.

In this solution, based on a conventional application scheme of lithium iron phosphate systems at the cabinet level in the UPS backup power industry, in view of the key and challenging problem of fire prevention and extinguishing of ternary lithium batteries, a design is made at the module level or even smaller module units to ensure that the final product application meets market and customer requirements.

According to the solution, the fire-resistant design is made at the module level and between smaller module units and between the 18650 cells, and the fire extinguishing microcapsules are arranged in the smaller module units to extinguish a flame as soon as the flame appears after thermal runaway. Additionally, the fire-resistant barrier is designed between smaller module units to prevent the fire from spreading among the module units after thermal runaway.

A specific design principle is as follows. The cells are implemented as ternary 18650 lithium-ion cells. The cells are connected in parallel and series, and then fixed and shaped via a plastic bracket. To facilitate assembly, the cells are connected in series and parallel on the upper and lower sides of the plastic bracket, that is, on the positive and negative electrodes of the cells. Once a cell experiences thermal runaway, a vent valve at the positive electrode of the cell first releases gas, which is flammable and possibly causes a flame. According to the present disclosure, sheet-shaped fire extinguishing microcapsules are arranged over the vent valve at the positive electrode of the cell. In a case where a flame appears at the vent valve of the cell, the fire extinguishing microcapsules are triggered to extinguish the flame. In addition, gaps are leaved between the cells to dispose mica fire-resistant sheets, forming individual "cell wells" between the plastic module brackets. In a case where a certain cell experiences thermal runaway, the "cell wells" formed by the mica fire-resistant sheets between the cells can isolate the cell which experiences thermal runaway within its own unique "cell well", so that thermal runaway of the cell can be blocked. Furthermore, fiberglass insulation boards are disposed on the upper and lower sides of the plastic bracket for fire protection, preventing flames in the module from spreading outwards. By means of the design of the three parts described above, a fire extinguishing and fire-resistant structure of the module is formed, thereby meeting a product requirement.

The above are merely preferred embodiments of the present disclosure and are not intended to limit the present disclosure. For those skilled in the art, various modifications and variations may be made to the present disclosure. Any modification, equivalent substitution and improvement made within the spirit and principle of the present disclosure should be included in the protection scope of the present disclosure.

## Claims

1. A fire-resistant battery module, comprising:
a plurality of cells (10) spaced apart from each other;
a fire-resistant partition structure (20) distributed in gaps between the plurality of cells (10) to block heat transfer between adjacent cells (10);
a fire extinguishing microcapsule (30) disposed at positive electrode of the cell (10) to extinguish fire at the positive electrode of the cell (10);
two fire-resistant boards (40) arranged side by side, wherein the plurality of cells (10), the fire-resistant partition structure (20) and the fire extinguishing microcapsule (30) are all located between the two fire-resistant boards (40).

2. The fire-resistant battery module according to claim 1, wherein the plurality of cells (10) are arranged in a plurality of rows and a plurality of columns, the fire-resistant partition structure (20) comprises a plurality of lateral fire-resistant sheets (21) and a plurality of longitudinal fire-resistant sheets (22) which are arranged in a cross manner to separate and form a plurality of partition cavities, within each of which has one of the cells (10).

3. The fire-resistant battery module according to claim 2, wherein the lateral fire-resistant sheet (21) has a first slot, the longitudinal fire-resistant sheet (22) has a second slot, and the longitudinal fire-resistant sheet (22) is inserted into the first slot and the lateral fire-resistant sheet (21) is inserted into the second slot to connect with each other.

4. The fire-resistant battery module according to claim 2, wherein a length of the lateral fire-resistant sheet (21) is greater than a length of the longitudinal fire-resistant sheet (22), an end of the lateral fire-resistant sheet (21) is formed as a flange (211), and one of the cells (10) is provided in an area between the flange (211) and a longitudinal fire-resistant sheet (22) adjacent to the flange (211).

5. The fire-resistant battery module according to claim 2, wherein the lateral fire-resistant sheet (21) has a multi-layer structure, which comprises at least one layer of coated mica layer and at least one layer of reinforced glass cloth layer, a thickness of the lateral fire-resistant sheet (21) is in a range from 0.5mm to 1.5mm, and a material of the longitudinal fire-resistant sheet (22) is the same as that of the lateral fire-resistant sheet (21).

6. The fire-resistant battery module according to claim 1, wherein positive electrodes of a portion of the cells (10) face one of the fire-resistant boards (40), and positive electrodes of the other portion of the cells (10) face the other one of the fire-resistant boards (40); the fire-resistant battery module comprises a plurality of the fire extinguishing microcapsules (30) which are distributed on both sides of the plurality of cells (10), and positions and shapes of the plurality of fire extinguishing microcapsules (30) match positions where positive electrodes of the plurality of cells (10) are distributed.

7. The fire-resistant battery module according to claim 1, wherein each of the fire extinguishing microcapsules (30) covers positive electrodes of at least two of the cells (10), wherein the each of the fire extinguishing microcapsules (30) is bonded with the positive electrodes of the at least two of the cells (10).

8. The fire-resistant battery module according to claim 1, wherein the fire extinguishing microcapsule (30) is a sheet formed of perfluorohexanone, and a thickness of the fire extinguishing microcapsule (30) is in a range from 1.5mm to 3.5mm.

9. The fire-resistant battery module according to claim 1, wherein a plurality of exhaust vents (41) are distributed on the fire-resistant board (40), and the fire-resistant board (40) is fixed by bonding.

10. The fire-resistant battery module according to claim 1, wherein a material of the fire-resistant board (40) is glass fiber, and a thickness of the fire-resistant board (40) is in a range from 0.5mm to 1.5mm.

11. The fire-resistant battery module according to claim 1, further comprising a first bracket (51) and a second bracket (52) connected to each other, the first bracket (51) and the second bracket (52) are both located between the two fire-resistant boards (40), the fire-resistant partition structure (20) and the plurality of cells (10) are both located within the first bracket (51) and the second bracket (52), and the fire-resistant partition structure (20) is bonded to at least one of the first bracket (51) or the second bracket (52).

12. A battery assembly, comprising an outer shell (60) and the fire-resistant battery module according to any one of claims 1 to 11, wherein the battery assembly comprises a plurality of the fire-resistant battery modules which are arranged side by side within a cavity of the outer shell (60).
